(19) Europäisches Patentamt
European Patent Office
Office européen des brevets

(11) Veröffentlichungsnummer: **0 192 182**
**A2**

(12) # EUROPÄISCHE PATENTANMELDUNG

(21) Anmeldenummer: 86101780.4

(22) Anmeldetag: 12.02.86

(51) Int. Cl.⁴: **A 01 J 11/04**
**B 01 D 19/00**

(30) Priorität: 16.02.85 DE 3505466

(43) Veröffentlichungstag der Anmeldung:
27.08.86 Patentblatt 86/35

(84) Benannte Vertragsstaaten:
AT BE CH DE FR GB IT LI LU NL

(71) Anmelder: OTTO TUCHENHAGEN GmbH & Co. KG
Berliner Strasse 10 Postfach 1140
D-2059 Büchen(DE)

(72) Erfinder: Mieth, Hans Otto, Dipl.-Ing.
Sandkrug 3
D-2058 Schnakenbek/Elbe(DE)

(72) Erfinder: Fuhrmann, Peter, Ing. grad.
Cesenaticostrasse 17
D-2503 Schwarzenbek(DE)

(54) **Verfahren und Vorrichtung zur Gasabscheidung aus Milch und Abgrenzung von Milchmengen.**

(57) Die Erfindung betrifft ein Verfahren und eine Vorrichtung zur Gasabscheidung aus Milch und Abgrenzung von Milchmengen im Zuge der Überführung dieser Milchmengen aus einem Milchbehälter in einen Sammelbehälter.

Durch ein derartigederartiges Verfahren, das mit kleinerer Milchvorlage als die bekannten Verfahren arbeitet, wird ein gegenüber diesen verbesserter Abscheidegrad von Luft aus Milch erreicht. Die Vorrichtung zur Durchführung des Verfahrens und seiner Weiterbildung ermöglicht gegenüber bekannten Vorrichtungen eine weitere Verbesserung des Abscheidegrades von Luft aus Milch und eine genauere Mengenabgrenzung, insbesondere bei nachschwallender Milchförderung.

Dies wird unter anderem verfahrensmäßig dadurch sichergestellt, daß die Gasabscheidung durch Fliehkräfte in einer rotierenden Hauptströmung, die ihre Antriebsenergie aus sich selbst bezieht, gezielt forciert, und daß eine zweistufige Gasabscheidung durchgeführt wird. Vorrichtungsmäßig wird dies unter anderem dadurch erreicht, daß der Gehäusemantel (1a) einen gegenüber seiner Höhe kleinen Durchmesser im Bereich des Einlaufstuzens (1d) aufweist, daß der Auslaufstutzen (1e) tangential aus dem Gehäusemantel (1a) ausmündet, daß der Schwimmer (6) in seiner Schaltphase den Verdrängungskörper (5) mit der Mittelöffnung (6a) umschließt, und daß ein rohrförmiges, in sich geschlossenes Leitblech (10) in Verbindung mit dem Einlaufstutzen (1d) vorgesehen ist (Figur 6).

./...

EP 0 192 182 A2

Croydon Printing Company Ltd

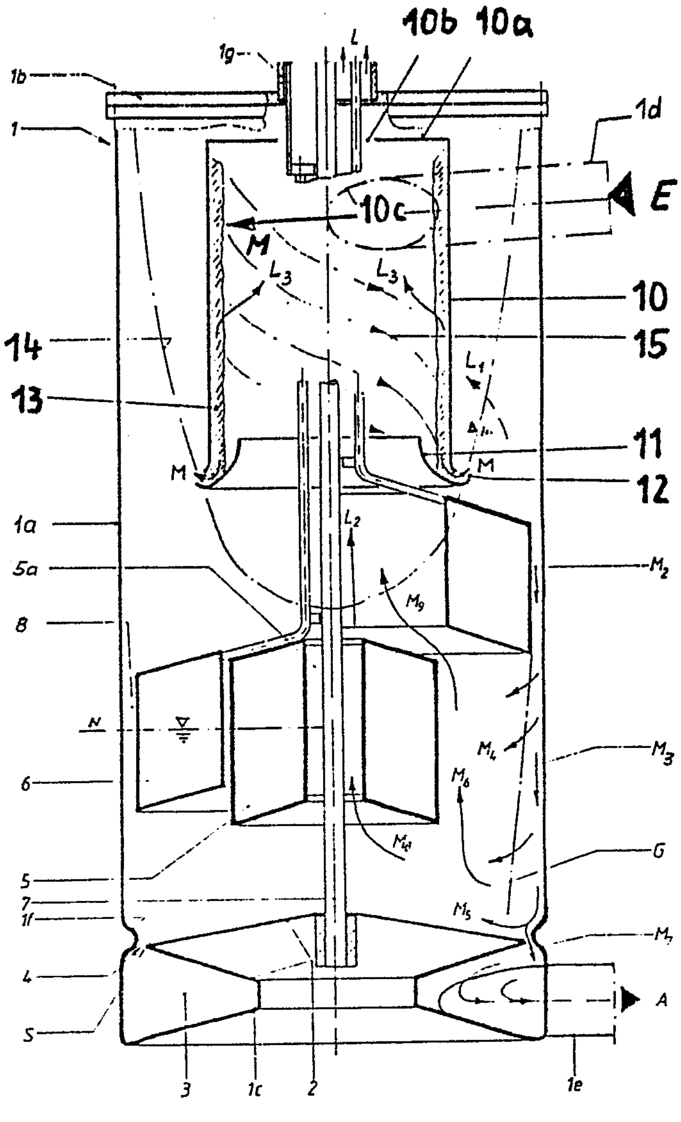
10b
10a
L
1g
1b
1
1d
E
10c
M
L3
L3
10
14
15
L1
13
11
M
M
12
1a
L2
5a
M2
M9
8
N
M4
M3
6
M6
M41
G
5
7
M5
1f
M7
4
A
S
3
1c
2
1e

Fig. 6

0192182

OTTO TUCHENHAGEN
GmbH & Co. KG
Berliner Straße 10
D-2059 Büchen

10.02.1986
Schlo/mi
53ASW5n

Europäisches Patentamt
8000 München 2

PATENTANMELDUNG

Anmelder:
Firma Otto Tuchenhagen
GmbH & Co. KG
Berliner Straße 10
D-2059 Büchen

# Verfahren und Vorrichtung zur Gasabscheidung aus Milch und Abgrenzung von Milchmengen

Die Erfindung betrifft ein Verfahren zur Gasabscheidung aus Milch und Abgrenzung von Milchmengen im Zuge der Überführung dieser Milchmengen aus einem Milchbehälter in einen Sammelbehälter gemäß dem Oberbegriff des Hauptanspruchs. Darüber hinaus bildet die Erfindung eine Vorrichtung aus zur Durchführung des erfindungsgemäßen Verfahrens nach dem Oberbegriff des Anspruchs 3.

Eine dem Oberbegriff des Anspruchs 3 weitgehend entsprechende Abscheidevorrichtung zeigt die DE-OS 28 55 653. Bei der bekannten Vorrichtung bilden jedoch Schwimmer und Verdrängerkörper ein gemeinsames Bauteil, der Schwimmer hat also gleichzeitig die Funktion eines Verdrängers.

Vorrichtungen der einleitend gekennzeichneten Art zur Durchführung des Verfahrens der eingangs gekennzeichneten Gattung haben zwei Funktionen zu erfüllen:

1. Sie haben die die Meßanlage durchströmende Milchmenge möglichst vollständig zu entgasen;

2. sie haben die von verschiedenen Lieferanten nacheinander angenommenen Milchmengen im Rahmen der von der Physikalisch Technischen Bundesanstalt überwachten und in der Eichordnung (vgl. Bundesgesetzblatt I vom 21.1.1975, EO) festgelegten Eichfehlergrenzen abzugrenzen.

Eine möglichst vollständige Entgasung der Milch ist deshalb notwendig, weil die infrage kommenden Meßanlagen das Volumen der die Meßanlage durchströmenden Milch und nicht deren Masse erfassen. Die Vergütung der angenommenen Milch erfolgt jedoch nach der Milchmasse, wobei der Zusammenhang zwischen Masse und Volumen über einen sogenannten Umrechnungsfaktor erfolgt. Dieser Umrechnungsfaktor ist nichts anderes als die Dichte der den Volumenzähler der Meßanlage durchströmenden Milch; er wird im wesentlichen von der Vorrichtung der einleitend gekennzeichneten Art bestimmt, ist in der Regel abhängig vom Milcheinzugsgebiet, regional einheitlich festgelegt und stellt jenen Wert dar, der aufgrund des Standes der Technik auf diesem Gebiet mit durchschnittlichem technischem Aufwand und fachmännischem Sachverstand möglich ist.

Die Fachwelt ist seit langem bemüht, Fortschritte auf dem Gebiet der Gasabscheidung aus Milch in Verbindung mit einer Mengenabgrenzung zu erzielen. Von diesem Bemühen, sogenannte Luftabscheider zu verbessern, zeugen eine Vielzahl Druckschriften, in denen die Nachteile des Standes der Technik erörtert und Maßnahmen zu deren Beseitigung vorgeschlagen werden (vgl. z.B. (DE-PS 24 37 306, DE-PS 26 37 026, DE-OS 30 25 502, DE-OS 31 235, DE-OS 30 40 670).

Die bekannten Lösungsvorschläge sind durch folgende Gemeinsamkeiten gekennzeichnet:

1. Als Abscheidemechanismus wird der Gasblasenauftrieb im Schwerefeld der Erde genutzt und forciert. Als Konsequenz aus dieser Betrachtungsweise wird zwangsläufig eine möglichst lange Verweilzeit der Milch im Luftabscheider bei möglichst kleinen Auftriebswegen angestrebt. Es ergeben sich Behälter, die bezogen auf ihre Höhe große Durchmesser aufweisen (DE-PS 24 37 306, DE-PS 26 37 026, DE-OS 30 40 670).

2. Die Rotation der im allgemeinen tangential in den oberen Bereich des Luftabscheiderbehälters eintretenden Milch wird entweder durch Einbauten im unteren Bereich nahezu vollständig aufgehoben (rotationsfreie Strömung wird angestrebt, vgl. DE-PS 24 37 306) oder es wird versucht, die Rotationskomponente aufrecht zu erhalten (Einbau von Leitblechen oder dgl., vgl. DE-PS 26 37 026).

Daß das vorliegende Problem mit den bekannten Lösungsmitteln als nicht befriedigend gelöst angesehen werden kann, beweisen einerseits die geltenden Umrechnungsfaktoren und andererseits die tatsächlich erreichten Milchdichten hinter dem Luftabscheider, die insbesondere bei kleinen anzunehmenden Milchmengen noch beträchtlich von der Dichte der vollständig entgasten Milch abweichen.

Die Erklärung für diesen Tatbestand liegt auf der Hand. Kleine und kleinste in Milch gelöste Gasblasen sind allein über Auftriebskräfte selbst bei großen Verweilzeiten, d.h. großen Abscheiderbehältern mit großen Flüssigkleitsvorlagen, nicht mehr austragbar.
Ihre Aufstiegsgeschwindigkeit - dieses trifft vor allem für kalte Milch mit hoher Viskosität zu - ist selbst im beruhigten Kernbereich des Abscheiderbehälters nicht mehr ausreichend. Abgesehen davon sind im Durchmesser große Abscheiderbehälter bei den im allgemeinen beengten Platzverhältnissen im Umfeld einer Meßanlage nur schwer unterzubringen.

Einbauten zur Aufrechterhaltung der Rotationskomponente (vgl. DE-PS 26 37 026) sind unzureichend, da sie grundsätzlich reibungsbehaftet arbeiten und Rotationsenergie in Reibungswärme dissipieren.

Ein weiterer Nachteil trifft sämtliche bekannten Luftabscheider, die mit möglichst großer Flüssigkeitsvorlage arbeiten. Es handelt sich um die sogenannte Nachentgasung einer relativ großen Milchmenge im Luftabscheider, die dazu führt, daß der Milchspiegel zum Zeitpunkt des Abbruchs der Förderung eine Niveauhöhe im Luftabscheiderbehälter hat, die größer ist als jene, welche der Milchspiegel einnehmen würde, wenn die Restmilchmenge im Luftabscheiderbehälter vollständig entgast wäre. Das Problem der Nachentgasung erschwert die einleitend beschriebene Mengenabgrenzung oder macht sie gar bei kleinen und kleinsten anzunehmenden Milchmengen im Rahmen der durch die Eichordnung vorgeschriebenen Eichfehlergrenzen unmöglich. Zur Beseitigung dieser Nachteile wurden aufwendige Maßnahmen vorgeschlagen, wie beispielsweise eine Herabsetzung der Milchförderleistung in der Endphase des Übernahmevorganges (DE-OS 30 31 235) oder aber durch aufwendige Ausgestaltung des Schwimmers in

Verbindung mit besonderen Maßnahmen zur Bemessung der durchströmbaren lichten Querschnittsflächen des Luftabscheiderbehälters. (DE-OS 30 25 502).

Der Erfindung liegt die Aufgabe zugrunde, ein Verfahren der im Oberbegriff des Hauptanspruchs angegebenen Art zu schaffen, das mit kleinerer Milchvorlage als die bekannten Verfahren arbeitet und dabei einen gegenüber diesen verbesserten Abscheidegrad von Gas, speziell Luft, aus Milch erreicht.

Darüber hinaus ist es Ziel der Erfindung, eine Vorrichtung zur Durchführung des erfindungsgemäßen Verfahrens auszubilden, die gegenüber bekannten Vorrichtungen eine genauere Mengenabgrenzung, insbesondere bei nachschwallender Milchförderung, ermöglicht.

Diese Aufgabe wird erfindungsgemäß durch das Kennzeichen des Hauptanspruchs gelöst. Die erfindungsgemäße Lösung nutzt nicht mehr, wie die bekannten Anordnungen und die ihnen zugrunde liegenden Verfahren, allein den Abscheidemechanismus durch Gasblasenauftrieb im Schwerefeld der Erde, sondern sie macht sich gezielt die erhöhte Abscheidewirkung durch die Fliehkräfte in einer rotierenden Hauptströmung zu eigen.

Eine vorteilhafte Weiterbildung des erfindungsgemäßen Verfahrens verbessert den Abscheidegrad von Luft aus Milch durch zweistufige Gasabscheidung, wobei sich in einer Vorstufe die Luft im Gegen- oder alternativ im Gleichstrom zum filmartig ausgebreiteten Trägermedium Milch abscheidet.

Anschließend sieht das Verfahren vor, daß die vorentgaste Milch weitestgehend kreuzungsfrei in die Hauptströmung eingeleitet oder auf diese aufgeschichtet wird.

Es hat sich in der Praxis gezeigt, daß die Einleitung des Luft/Milch-Gemisches in die rotierende Hauptströmung den gewünschten Abscheidegrad wesentlich mitbestimmt. Kreuzt die lufthaltige Milch mit ihrer am Eintritt vorherrschenden hohen Strömungsenergie die Hauptströmung (ein radialer Durchtritt durch den Rotationsparaboloiden von außen nach innen ist unvermeidbar, da die Flüssigkeit der Hauptströmung an dem Gehäusemantel bis in den Eintrittsbereich hochströmt), so werden die mitgeführten Luftanteile sehr intensiv in der Milch verteilt. Zusätzlich beobachtet man - mehr oder weniger abhängig vom Auftreffwinkel des Eintrittsstrahls auf die Oberfläche des Rotationspraraboloiden - ein Einschlagen von Luft aus der Gasphase in die Milch.

Das vorgeschlagene Verfahren schafft hier Abhilfe. Zum einen wird durch die filmartige Ausbreitung des Trägermediums Milch der Weg für die Abscheidung insbesondere großer Luftblasen besonders wirkungsvoll verkürzt. Außerdem schafft die Vorschaltung einer zusätzlichen Abscheidestufe die Möglichkeit, die vorentgaste Milch weitestgehend kreuzungsfrei und unter günstigem Eintrittswinkel in die Hauptströmung einzuleiten oder auf diese aufzuschichten.

Die Vorrichtung zur Durchführung des Verfahrens nach dem Hauptanspruch löst die gestellte Aufgabe dadurch, daß der Gehäusemantel einen gegenüber seiner Höhe kleinen Durchmesser im Bereich des Einlaufstutzens aufweist, daß der Auslaufstutzen tangential aus dem Gehäusemantel ausmündet, und daß der Schwimmer in seiner Schaltphase den Verdrängungskörper mit der Mittelöffnung umschließt.

Die Lösung verbessert die Gasabscheidung auch teilweise dadurch, daß die Rotationskomponente der Hauptströmung nicht durch Einbauten, insbesondere unterhalb des Schwimmers, verringert wird. Neben der Drallerzeugung durch tangentialen Eintritt trägt der tangential aus dem Gehäusemantel ausmündende Auslaufstutzen besonders wirksam zur Drallerhaltung bei. Das Gas/Milch-Gemisch strömt mit hoher Geschwindigkeit dem oberen Bereich des Gehäuses zu und läuft an der Innenwandung des Gehäusemantels als dünner, energiereicher Film schraubenförmig herab. Die benachbarten Bereiche, einschließlich des Kernbereichs des Gehäuses, sind dabei ebenfalls mit Milch gefüllt. Die Gasblasen streben unter dem Einfluß der Fliehkraft mit der Schwebegeschwindigkeit

$$w_{sz} = K w_s \qquad (1)$$

radial nach innen in den Randbereich des energiereichen Flüssigkeitsfilms und werden von einer aufwärts gerichteten Sekundärströmung erfaßt. Mit

$$K = w_t^2/(rg) \qquad (2)$$

bezeichnet man das Beschleunigungsvielfache, wobei $w_t$ die Umfangsgeschwindigkeit des einströmenden Gas/Milch-Gemisches, r der Behälterradius und g die Erdbeschleunigung ist.

Mit $w_s$ wird die Aufstiegsgeschwindigkeit einer Gasblase im Erdschwerefeld bezeichnet, wobei diese Aufstiegsgeschwindigkeit unter anderem eine Funktion des Gasblasendurchmessers $d_p$ ist:

$$w_s = f(d_p). \qquad (3)$$

An dem quantitativen Zusammenhang aus den Gleichungen (1) und (2) erkennt man, daß die radial nach innen gerichtete Schwebegeschwindigkeit $w_{sz}$ dem Quadrat der Umfangsgeschwindigkeit $w_t$ proportional und dem Radius und damit dem Durchmesser des die Rotationsströmung berandenden Behälters umgekehrt proportional ist.

Die Erfindung trägt dieser physikalischen Erkenntnis Rechnung, indem der Gehäusemantel einen gegenüber seiner Höhe kleinen Durchmesser aufweist. Damit andererseits ein bestimmter, vom Gasblasendurchmesser $d_p$ abhängiger axialer Strömungsweg von jeder Gasblase zurückgelegt werden kann, und sie dadurch aus dem energiereichen Flüssigkeitsfilm in Wandnähe in den Bereich der aufwärts gerichteten Sekundärströmung gelangt (vgl. Strömungsfelder in Hydrozyklonen, D.F. Kelsall, Trans. Inst. Chem. Engrs. 30, 87/108 (1952)), ist der Schwimmer außerhalb seiner Schaltphase oberhalb des Verdrängungskörpers angeordnet, sind eine bezogen auf den Durchmesser des Gehäuses im Bereich des Einlaufstutzens große Höhe und eine möglichst kleine axiale Strömungskomponente am Eintrittsstutzen (axiale Neigung) vorgesehen.

Es ist wichtig, daß die radialen Separationsbewegungen der Gasblasen aus dem energiereichen Flüssigkeitsfilm heraus nicht durch Einbauten behindert werden. Daher umfaßt der Schwimmer nur in seiner Schaltphase (Bereich oberhalb und in der Nähe der Abschaltstellung) den Verdrängungskörper. Bei hoher Annahmeleistung gibt der Schwimmer einen großen Strömungsquerschnitt zwischen Verdrängungskörper und Innenwand des Gehäusemantels frei. Die Gasblasen können sich dadurch in einem axial großen Bereich unterhalb des Schwimmers ungehindert radial nach innen unter dem Einfluß der Fliehkräfte in Bereiche mit einer aufwärts gerichteten

Vertikalströmung abscheiden. Da der erfindungsgemäß tangential ausmündende Austrittsstuzen außerordentlich wirksam zur Drallerhaltung beiträgt, beruht bei der erfindungsgemäßen Vorrichtung - im Gegensatz zu bekannten Anordnungen - der hohe Abscheidegrad von Luft aus Milch zu einem beträchtlichen Teil auf der strömungsgünstigen Ausbildung des Bereichs unterhalb des Schwimmers.

Der Durchtritts-Ringspalt zwischen Gehäusemantel und Außenumfang des Schwimmers ist so bemessen, daß selbst bei größter Annahmeleistung die gesamte Milchmenge diesen Querschnitt durchströmt, ohne daß es dadurch zu einer Erhöhung der axialen oder tangentialen Geschwindigkeitskomponente kommt. Die radiale Separationsbewegung kleiner Luftblasen wird in diesem Bereich kaum behindert, da die axiale Erstreckung des Schwimmers relativ klein ist. Große Luftblasen haben sich dagegen überwiegend oberhalb des Schwimmers über die Oberfläche des Rotationsparaboloiden abgeschieden.

Aus der DE-PS 28 55 653 ist zwar bereits eine Vorrichtung zur Entgasung und Abgabe einer Flüssigkeit in eine Volumenmeßeinrichtung bekannt, bei der der Schwimmer - ebenso wie bei der Vorrichtung nach der Erfindung - an einem Außenumfang mit der Innenwandung des Gehäuses einen Durchtritts-Ringspalt bildet, und bei der zumindest ausweislich der Zeichnung, Figur 1, der Gehäusemantel einen gegenüber seiner Höhe kleinen Durchmesser aufweist. Bei dieser bekannten Anordnung wird allerdings durch einen zweiten Schwimmer gezielt nur die Ausbildung der Strömung oberhalb eines ersten Schwimmers beeinflußt. Die tangentiale Geschwindigkeitskomponente der Strömung wird dabei unterhalb des ersten Schwimmers durch besondere Einbauten aufgehoben; die Abströmung erfolgt in konsequenter Verfolgung der der Vorrichtung zugrunde liegenden Intentionen über einen zentral angeordneten Auslaufstutzen.

Da der erste Schwimmer gleichzeitig die Funktion eines Verdrängungskörpers übernimmt, wodurch seine axiale Beweglichkeit nach oben begrenzt und der Durchtritts-Ringspalt zwischen Schwimmer und Gehäusemantelmantel zwangsläufig bis weit in den unteren Bereich des Gehäuses hinabreicht, gibt diese bekannte Vorrichtung weder Hinweise auf die der vorliegenden Erfindung zugrunde liegende Aufgabe, noch gibt sie Anregungen zu deren Lösung.

Um ein Mitreißen von unvollständig entgaster Milch aus dem Kernbereich des Gehäuses zu verhindern, sieht eine Weiterbildung der Vorrichtung gemäß der Erfindung ein Einbauteil vor, das mit dem Gehäusemantel einen Ringspalt bildet und in Verbindung mit dem Bodenteil einen Ringraum begrenzt, der in den Auslaufstutzen ausmündet und über den Ringspalt mit dem mittleren Bereich des Gehäuses verbunden ist. Der Eintrittsquerschnitt des Ringraumes wird somit durch den einerseits von der Innenwandung des Gehäusemantels begrenzten Ringspalt gebildet, wodurch sichergestellt ist, daß nur ein entgaster Flüssigkeitsfilm das Gehäuse über den Austrittsstutzen verlassen kann.

Eine vorteilhafte Ausgestaltung der Vorrichtung gemäß der Erfindung sieht vor, daß das Einbauteil an seinem den Ringspalt begrenzenden Umfang eine Schälkante aufweist, und daß am Gehäusemantel eine nach innen ausgebildete umlaufende Auswölbung vorgesehen ist, wobei die Schälkante innerhalb eines axialen Bereichs beiderseits der Auswölbung positioniert ist. An dieser sogenannten Schälstelle kann durch Positionierung der Schälkante des Einbauteils jene Filmdicke begrenzt werden, die in den Ringraum gelangen soll. Alle anderen Strömungsbereiche, die in radialer Richtung betrachtet, weiter innen liegen, werden umgelenkt und strömen aufwärts. Durch die Auswölbung des Gehäusemantels im Bereich der Schälkante erfährt die abwärts

gerichtete Filmströmung eine nach innen gerichtete Krümmung, wodurch vorrangig die entgaste und damit schwerere Milch auf wandnahen Strömungsbahnen verbleibt, wogegen die unvollständig entgaste und damit leichtere Milch radial nach innen abgedrängt wird.

Als besonders vorteilhaft hat sich herausgestellt, wenn die Schälkante etwas unterhalb der maximalen Auswölbung positioniert ist. Offenbar ist überwiegend nur die vollständig entgaste Milch auf wandnahen Strömungsbahnen in der Lage, die durch die Auswölbung und die Schälkante geforderte zweifache Umlenkung zu realisieren.

Eine Verstärkung des vorgenannten Effektes wird durch eine weitere Ausgestaltung der Vorrichtung gemäß der Erfindung dadurch erreicht, wenn die Auswölbung und die zugeordnete Schälkante in Mehrfachanordnung als Reihenschaltung vorgesehen sind.

Eine außerordentlich einfache Gehäusegestaltung der Vorrichtung gemäß der Erfindung liegt vor, wenn der Gehäusemantel über seine gesamte Höhe zylindrische Form aufweist. Gegenüber einer anderen vorteilhaften Ausführungsform des Gehäusemantels, wobei dieser sich zwischen dem Einlauf- und dem Auslaufstutzen stetig konisch verjüngt, ergeben sich dadurch zumindest im Bereich unterhalb des Schwimmers keine strömungsmechanischen Nachteile. Diese Tatsache läßt sich durch einschlägige Untersuchungen belegen. So schreibt H. Travinski in der Zeitschrift Chemie-Ingenieur-Technik, 30.Jahrg. 1958/Nr. 2, daß der Zylinderzyklon wirkungsmäßig gegenüber dem Konuszyklon nicht benachteiligt ist. Die Wahl zwischen Konus- und Zylinderform könne ohne Veränderung der Abscheidewirkung aus reinen Zweckmäßigkeitsgründen getroffen werden.

Mit der konischen Ausbildung des Gehäusemantels ergibt sich der nachfolgend genannte Vorteil. Durch die senkrechte Auftriebsbewegung des Schwimmers wird zwangsläufig der Durchtritts-Ringspalt zwischen dem Außenumfang des Schwimmers und der Innenwandung des konischen Gehäusemantels vergrößert. Das hat zur Folge, daß sich die Rotationsströmung noch wesentlich unbehinderter ausbilden kann, als dies bei der Zylinderform des Gehäusemantels der Fall ist.

Eine andere vorteilhafte Weiterbildung der Vorrichtung gemäß der Erfindung sieht vor, daß das Einbauteil als Flüssigkeitsverdränger ausgebildet ist. Durch diese Maßnahme wird die Milchvorlage im Sinne der Aufgabenstellung weiter verringert. Reinigungs- und vor allem Entlüftungsprobleme am Einbauteil, denen in der Regel nur durch zusätzliche Öffnungen an kritischen Stellen abzuhelfen wäre, werden dadurch sicher vermieden.

Eine einwandfreie Entleerung des Gehäuses wird sichergestellt, wenn, wie dies eine weitere Ausführungsform gemäß der Erfindung vorsieht, der Bodenteil in radialer Richtung von außen nach innen stetig ansteigend ausgebildet ist.

Um eine vollständig ungestörte Ausbildung der Rotationsströmung innerhalb der Vorrichtung nach der Erfindung sicherzustellen, wird nach einer anderen Ausgestaltung vorgeschlagen, daß vor dem Durchströmen des Gehäuses der Schwimmer aus dem Strömungsbereich in eine Position oberhalb des Einlaufstutzens aufschwimmt. Die Kennzeichnung "vor dem Durchströmen" soll verdeutlichen, daß zunächst das Flüssigkeitsniveau im Gehäuse soweit ansteigt, daß durch Kompression des Luftpolsters oberhalb des Flüssigkeitsniveaus eine Milchverdrängung aus dem Gehäuse und damit dessen Durchströmen gegen den in der Regel vorhandenen Widerstand eines

Rückschlagventils stattfinden kann. Falls die erfindungsgemäße Vorrichtung im Vakuum betrieben wird, setzt die Förderung von Milch infolge einer hinter dem Auslaufstutzen angeordneten Fördereinrichtung bekanntlich erst nach Erreichen eines bestimmten Flüssigkeitsstandes oberhalb des Abschaltniveaus ein. Somit kann der Schwimmer auch bei dieser Betriebsweise vor dem Durchströmen des Gehäuses aus dem Strömungsbereich in eine Position oberhalb des Einlaufstutzens aufschwimmen.

Eine weitere Ausführungsform der Vorrichtung gemäß der Erfindung, die wirkungsmäßig der vorstehenden gleichkommt, sieht vor, daß vor dem Durchströmen des Gehäuses ein in Segmente aufgeteilter Schwimmer aus dem Strömungsbereich in eine Position oberhalb des Verdrängungskörpers radial nach innen geführt wird.

Eine andere vorteilhafte Ausgestaltung der Vorrichtung nach der Erfindung sieht vor, daß innerhalb der Öffnung des Verdrängungskörpers ein zweiter Schwimmer vorgesehen ist, der in der Abschaltstellung des Schwimmers den Flüssigkeitsstand über mechanische Mittel in einem Bereich oberhalb des Deckelteils abbildet. Da sich der den Verdrängungskörper umschließende Schwimmer in seiner Abschaltstellung ortsfest abstützt, kann durch ihn der zugeordnete Flüssigkeitsstand N nicht abgebildet werden. Ein in diesem Betriebszustand frei auf- und abwärts beweglicher, in der zentrischen Öffnung des Verdrängungskörpers angeordneter, relativ kleiner zweiter Schwimmer ist demgegenüber in der Lage, den Flüssigkeitsstand N über geeignete mechanische Mittel in einem Bereich außerhalb des Gehäuses abzubilden. Durch eine derartige Ausgestaltung der Vorrichtung nach der Erfindung kann auf die Anordnung von Schaugläsern im Bereich des Abschaltniveaus verzichtet werden. Bekanntlich schäumt Milch leicht auf, so daß die exakte Lage der Phasengrenzfläche zwischen Luft und Milch über ein Schauglas nicht immer eindeutig bestimmt werden kann. Ist als Kontrolleinrichtung des Flüssigkeitsniveaus ein Schauglas vorgesehen, so müssen nach

der Eichordnung an diesem übereinander drei Strichmarken angebracht sein, von denen die mittlere den Flüssigkeitsstand bezeichnet, der sich bei mittlerem Volumendurchfluß des Zählers am Ende einer Messung einstellt.

Um die Weiterbildung des erfindungsgemäßen Verfahrens mit dem Ziel einer zweistufigen Luftabscheidung in Verbindung mit der weitestgehend kreuzungsfreien Einleitung der vorentgasten Milch in die Hauptströmung zu realisieren, sieht eine andere vorteilhafte Ausgestaltung der Vorrichtung vor, daß unterhalb des Deckelteils und zentrisch zum Gehäusemantel ein rohrförmiges, in sich geschlossenes Leitblech angeordnet ist, das an einer höchstmöglichen Stelle eine Eintrittsöffnung in seinem Mantelbereich aufweist, an die der Einlaufstutzen tangential und erforderlichenfalls mit einer geringen abwärts gerichteten axialen Komponente angeschlossen ist, und das an seinem oberen Ende über ein eine zentrische Öffnung aussparendes Deckelteil teilweise geschlossen ist.

Durch Anordnung des Leitbleches ist es möglich, das Luft /Milch-Gemisch unter der Einwirkung der Zentrifugalkräfte spiralförmig als Flüssigkeitsfilm auf der Leitblech-Innenseite aufzubringen. Dadurch wird der Abscheideweg für die Luftblasen entscheidend verkürzt. Sie können sich im Gegenstrom zu ihrem Trägermedium Milch radial nach innen abscheiden.

Der Flüssigkeitsfilm fließt nach unten ab und wird dort, gemäß einer weiteren vorteilhaften Ausführungsform der Vorrichtung gemäß der Erfindung, mit Hilfe eines ringförmigen Umlenkbleches, das im Bereich des unteren Endes des Leitbleches angeordnet ist und mit diesem einen zentrischen Ringspalt bildet, radial nach außen umgelenkt,

so daß die vorentgaste Milch weitestgehend kreuzungsfrei in die Hauptströmung einleitet oder auf diese aufgeschichtet werden kann.

Eine andere vorteilhafte Ausgestaltung der Vorrichtung zur Durchführung des erfindungsgemäßen Verfahrens mit dem Ziel einer zweistufigen Luftabscheidung in Verbindung mit einer weitestgehend kreuzungsfreien Einleitung der vorentgasten Milch in die Hauptströmung bildet unterhalb des Deckelteils und zentrisch zum Gehäusemantel ein beiderseits offenes, in sich geschlossenes, nach oben sich erweiterndes, Leitblech aus, das an einer tiefstmöglichen Stelle eine Eintrittsöffnung in seinem Mantelbereich aufweist, an die der Einlaufstutzen tangential und erforderlichenfalls mit einer aufwärts gerichteten axialen Komponente angeschlossen ist.

Dadurch wird erreicht, daß eine aufwärts gerichtete, spiralförmige Filmströmung auf der Innenseite des Leitblechs vorliegt, aus der sich im Gleichstrom mit dieser Luftblasen radial nach innen abscheiden können. Die aufwärts gerichtete Komponente der Filmströmung ist in Verbindung mit dem Öffnungswinkel des Leitblechmantels so bemessen, daß ein Überströmen des Leitblechs über seinen oberen Rand hinaussichergestellt ist. Die Ausgestaltung eignet sich insbesonder dann, wenn der Flüssigkeitsspiegel in der Vorrichtung starken Höhenschwankungen unterworfen ist und unabhängig von diesen Höhenlagen eine Einleitung der vorentgasten Milch in die Hauptströmung mit den erfindungsgemäß angestrebten Vorteilen sichergestellt werden soll.

Eine Weiterbildung der letztgenannten Vorrichtung sieht vor, daß am oberen Ende des Leitblechs ein sich nach innen wölbender Kragen vorgesehen ist, der wenigstens eine, im Drehsinn der Eintrittsöffnung orientierte, tangentiale Austrittsöffnung aufweist, so daß die vorentgaste Milch weitestgehend kreuzungsfrei in die Hauptströmung eingeleitet bzw. auf diese aufgeschichtet werden kann.

Damit sowohl das Leitblech als auch der an diesem angeschlossene Einlaufstutzen möglichst einfach demontiert werden können, sieht eine andere Ausgestaltung der Vorrichtung gemäß der Erfindung vor, daß der Einlaufstutzen über das Deckelteil zugeführt, und das Leitblech an letzterem befestigt ist.

Um eine genauere Mengenabgrenzung, insbesondere bei nachschwallender Milchförderung, zu ermöglichen, ist nach einer weiteren Ausgestaltung der Vorrichtung gemäß der Erfindung vorgesehen, daß sich der Schwimmer im Bereich seiner Abschaltstellung über eine Feder auf einem gehäusefesten Federwiderlager abstützt. Die erfindungsgemäße Feder hat die Aufgabe, beim Einfahren des Schwimmers in die Abschaltstellung dessen Gewichtskraft zunehmend durch die anwachsende Federkraft in Bezug auf die ihn umgebende, Auftrieb an ihm erzeugende, Flüssigkeit zu kompensieren. Der Schwimmer wandelt sich in dieser Phase zunehmend in einen Verdranger, wobei größere Schwankungen des Flüssigkeitsspiegels nur verhältnismäßig kleine Hubbewegungen des Schwimmers zur Folge haben. Insbesondere bei nachschwallender Milchströmung reagiert der Schwimmer außerst feinfühlig und mit geringen Hubbewegungen auf Niveauänderungen.

Zwar ist es aus der DE-AS 25 29 422 bekannt, einen Schwimmer auf einer Ventilstange zwischen einem oberen und einem unteren Mitnehmeranschlag unabhängig beweglich anzuordnen, und die Ventilstange durch eine Schließfeder vorzubelasten, wobei deren Schließkraft das Gewicht des Schwimmers untersowie das Gewicht der Ventilstange einschließlich der Mitnehmeranschläge und des von ihr getragenen Ventilgliedes überschreitet. Die bekannte Feder dient jedoch nicht der Erhöhung der Abschaltgenauigkeit des Schwimmers, sonder sie sorgt erfindungsgemäß für eine Zwischenstellung der Ventilstange, nachdem der Schwimmer den unteren Mitnehmeranschlag verlassen hat. Ein Hinweis darauf, die Feder zur

Erhöhung der Abschaltgenauigkeit des Schwimmers zu verwenden, ist aus dem Stand der Technik weder explizit zu entnehmen, noch wird sie durch diesen nahegelegt.

Ausführungsbeispiele der Erfindung sind in den Zeichnungen dargestellt und werden im folgenden näher beschrieben.

Es zeigen

Figur 1
einen Querschnitt in schematischer Darstellung durch eine Vorrichtung gemäß der Erfindung zur Durchführung des Verfahrens nach dem Hauptanspruch, wobei die Anordnung links von der Symmetrielinie die Vorrichtung in ihrer Abschaltstellung zeigt, während die rechtsseitige Darstellung die Vorrichtung im Betriebszustand bei voller Annahmeleistung beschreibt;

Figur 2a-2e
Querschnitte in schematischer Darstellung durch den unteren Bereich des Gehäuses der Vorrichtung gemäß Figur 1, wobei verschiedene Ausführungsformen des Einbauteils dargestellt sind;

Figur 3
eine Draufsicht auf das Gehäuse der Vorrichtung gemäß Figur 1, wobei mögliche Stutzenanordnungen dargestellt sind;

Figur 4
einen Schnitt durch eine Schälstelle der Vorrichtung gemäß Figur 1;

Figur 5
einen Querschnitt in schematischer Darstellung durch ein konisch gestaltetes Gehäuse der Vorrichtung zur Durchführung des Verfahrens nach dem Hauptanspruch;

53ASW5n
0192182

Figur 6 einen Querschnitt in schematischer Darstellung durch eine Vorrichtung zur Durchführung des weitergebildeten Verfahrens gemäß der Erfindung mit einer im Gegenstrom arbeitenden Vorstufe;

Figur 7 einen Querschnitt in schematischer Darstellung durch eine andere Vorrichtung zur Durchführung des weitergebildeten Verfahrens gemäß der Erfindung mit einer im Gleichstrom arbeitenden Vorstufe;

Figur 7a eine ausschnittsweise Draufsicht auf die Vorrichtung gemäß Figur 7 und

Figur 8 einen Querschnitt in schematischer Darstellung durch eine Vorrichtung gemäß der Erfindung mit einer gefederten Schwimmerauflagerung im Bereich seiner Abschaltstellung.

Ein Gehäuse 1 (Fig. 1) mit einem über seine gesamte Höhe zylindrischen Gehäusemantel 1a wird oberhalb von einem Deckelteil 1b und unterhalb von einem Bodenteil 1c, an das sich ein in den unteren Bereich des Gehäuses 1 hineinragendes Einbauteil 2 anschließt, begrenzt. Das Einbauteil 2 ist als Verdränger ausgebildet und begrenzt in Verbindung mit dem Bodenteil 1c einen Ringraum 3, der in einen tangential angeordneten Auslaufstutzen 1e ausmündet. An seinem äußeren Umfang weist das Einbauteil 2 eine Schälkante S auf, die mit dem Gehäusemantel 1a einen Ringspalt 4 bildet. Über diesen Ringspalt 4 ist der Ringraum 3 mit dem mittleren Bereich des Gehäuses 1 verbunden.

Im Bereich der Schälkante S ist an dem Gehäusemantel 1a eine nach innen ausgebildete umlaufende Auswölbung 1f vorgesehen, wobei die Schälkante S etwas unterhalb der Stelle der maximalen Auswölbung positioniert ist. In den oberen Bereich des Gehäuses 1 mündet ein Einlaufstutzen 1d tangential in den Behältermantel 1a ein. Der Einlaufstutzen 1d ist strichpunktiert dargestellt, da er vor der Zeichenebene liegt. Zwischen dem Bodenteil 1c und einem Kopfteil 1g, an das eine nicht dargestellt Entlüftungsvorrichtung angeschlossen ist, ist in der Symmetrieachse des Gehäuses 1 eine Halte- und Führungsstange 7 vorgesehen. Diese trägt im mittleren Bereich des Gehäuses 1 einen Verdrängungskörper 5, der mit einer durchgehenden zentrischen Öffnung 5a versehen ist. Auf der Halte- und Führungsstange 7 ist ein begrenzt auf- und abbeweglich geführter Schwimmer 6 angeordnet, der eine den oberen und den unteren Bereich des Gehäüses 1 miteinander verbindende Mittelöffnung 6a aufweist und mit dieser in seiner Schaltphase den Verdrängungsköper 5 umschließt. Der Schwimmer 6 bildet über seinen Außenumfang mit der Innenwandung des Gehäusemantels 1a einen Durchtritts-Ringspalt 8 und über seine Mittelöffnung 6a im Zusammenwirken mit dem Außenumfang des Verdrängungskörpers 5 einen nicht näher bezeichneten Ringspalt, der im wesentlichen der

axialen Beweglichkeit des Schwimmers 6 dient. Ein mit dem Schwimmer 6 verbundenes Gestänge 6b verlängert sich im Bereich des Deckelteils 1b in ein Rohr 6c, das in das Kopfteil 1g eingreift und dort beispielsweise nicht näher dargestellte induktiv arbeitende Näherungsinitiatoren steuert.

Eine andere Ausführungsform der Vorrichtung nach der Erfindung mit einem konischen Gehäusemantel 1a ist in Figur 5 dargestellt. Teile, die in ihrer Funktion jenen der Ausführungsform gemäß Figur 1 entsprechen, sind mit den dort verwendeten Bezeichnungen gekennzeichnet. Eine nähere Erläuterung erübrigt sich deshalb. Der Schwimmer 6 besitzt eine dem Gehäusemantel 1a entsprechende Konusform, so daß er in seiner Abschaltstellung einen allseits äquidistanten Abstand zur Innenwandung des Gehäusemantels 1a aufweist. Der Verdrängungskörper 5 ist lediglich einseitig fliegend über die Halte- und Führungsstange 7 gelagert. Das Gestänge 6b des Schwimmers 6 ist zentrisch innerhalb des Gehäuses 1 angeordnet und wird einerseits im Verdränger 5 und andererseits in dem Deckelteil 1b geführt. Durch die Konusform des Gehäusemantels 1a ergibt sich in der Betriebsstellung der erfindungsgemäßen Vorrichtung (rechtsseitige Darsellung) ein gegenüber der Abschaltstellung (linksseitige Darstellung) beträchtlich vergrößerter Durchtritts-Ringspalt 8 zwischen Schwimmer 6 und der Innenwandung des Gehäusemantels 1a.

Innerhalb der mittigen Öffnung 5a des Verdrängungskörpers 5 ist ein zweiter Schwimmer 9 angeordnet, der sich in diesem Bereich frei auf- und abwärts bewegen kann und über geeignete mechanische Mittel, beispielsweise über eine durch das Gestänge 6b hindurchgeführte Schwimmerstange 9a, den Flüssigkeitsstand N in einem Bereich oberhalb des

Deckelteils 1b abbilden kann. Die Anordnung eines zweiten Schwimmers 9 bleibt nicht allein auf eine Vorrichtung gemäß Figur 5 beschränkt. Die Vorrichtung gemäß Figur 1 kann in gleicher Weise mit einem derartigen zweiten Schwimmer 9 ausgestattet werden. Dazu ist lediglich notwendig, daß die mit dem zweiten Schwimmer 9 verbundene Schwimmerstange 9a bis in den Bereich oberhalb des Deckelteils 1b hineingeführt wird.

In Figur 2a ist eine andere Ausführungsform des als Verdränger ausgebildeten Einbauteils 2 dargestellt. Es bildet, wie bereits vorstehend beschrieben, mit einem Gehäusemantel 1a einen Ringspalt 4 und begrenzt in Verbindung mit dem Bodenteil 1c den Ringraum 3.

In den Figuren 2b bis 2e sind jeweils Einbauteile 2 dargestellt, bei denen eine Verdrängerwirkung gemäß Figur 1 und Figur 2a nicht gegeben ist. Sie stellen äußerst einfache Ausgestaltungen dar, wobei zum einen die Bildung des Ringspaltes 4 und zum anderen in Verbindung mit einem zum Innenraum des Gehäuses 1 konvex gewölbten Bodenteil 1c (Figur 2b, Figur 2c) oder in Verbindung mit einem ebenen Bodenteil 1c (Figur 2d, Figur 2e) die Begrenzung des Ringraumes 3 in jedem Falle sichergestellt ist.

Figur 3 zeigt zwei alternativ mögliche Anordnungen des Einlaufstutzens 1d bzw. 1d* in Bezug auf den Auslaufstutzen 1e. Die Stutzen können jedoch bezüglich ihrer Anordnung auf dem Umfang auch jede andere Position einnehmen, wenn nur sichergestellt ist, daß sie in Strömungsrichtung gesehen jeweils tangential ein- bzw. ausmünden.

In Figur 4 ist eine sogenannte Schälstelle im Bereich der Schälkante S des Einbauteils 2 dargestellt. Die Schälkante S besitzt einen kleinsten Abstand von der Kontur der Auswölbung 1f, der als Breite $\delta$ des Ringspaltes 4 bezeichnet ist. Die Schälkante S ist in der dargestellten Anordnung um den axialen Betrag $z = +a$ unterhalb der Stelle des kleinsten Durchmessers der Auswölbung 1f positioniert. Prinzipiell ist eine die Luftblasenabscheidung aus der Milch günstig beeinflussende Positionierung der Schälkante S in einem Bereich $-a < z < +a$ angezeigt und möglich.

Die Wirkungsweise der Vorrichtung zur Durchführung des Verfahrens nach dem Hauptanspruch wird anhand Figur 1 qualitativ erläutert. Die folgenden Ausführungen sind sinngemäß auch auf die Ausführungsform gemäß Figur 5 übertragbar. In der linksseitigen Darstellung hat der Schwimmer 6 seine tiefste Lage eingenommen. In dieser Stellung befindet sich das Milchniveau auf einer mit N bezeichneten Höhe. Sobald ein Gas/Milch-Gemisch über die Einlauföffnung E des Einlaufstutzens 1d in das Gehäuse 1 eintritt, beginnt der Schwimmer 6 aufzuschwimmen und bewegt sich dadurch aufwärts. Hat das Milchniveau beispielsweise eine in der rechtsseitigen Darstellung gezeigt Höhe erreicht (Kontur des Rotationsparaboloiden), so nimmt der Schwimmer dabei seine obere Lage ein. Diese Lage ist durch die nach oben hin begrenzte Aufwärtsbewegung des Gestänges 6b mit dem Rohr 6c gegeben. Letzteres hat biespielsweise eine nicht dargestellte Entlüftungsvorrichtung geschlossen, so daß die Luft oberhalb des Flüssigkeitsspiegels komprimiert ist, wodurch ein Durchströmen des Gehäuses 1 gegen den Widerstand eines der Auslaßöffnung A nachgeschalteten Rückschlagventils sichergestellt ist.

 

Falls die Vorrichtung gemäß der Erfindung im Vakuumbetrieb arbeitet, steuert der Schwimmer 6 über sein Gestänge 6b und das Rohr 6c eine der Auslauföffnung A nachgeschaltete Fördereinrichtung.

Eine Momentanaufnahme der in Betrieb befindlichen Vorrichtung gemäß der Erfindung hat etwa das rechtsseitig in Figur 1 qualitativ dargestellte Strömungsfeld. Ein mit einer großen tangentialen und einer kleinen axialen Strömungsgeschwindigkeit in das Gehäuse 1 eintretendes Gas/Milch-Gemisch strömt - schraubenförmig im Bereich der Innenwandung des Gehäusemantels 1a abwärts (M). Bereits oberhalb des Schwimmers 6 bildet sich eine Sekundärströmung $M_1$ aus, aus der sich eine Gasströmung $L_1$ über die Oberfläche des Rotationsparaboloiden abscheidet. Bei dieser ersten Abscheidung handelt es sich um Gasblasen größeren Durchmessers, während jene kleineren Durchmessers über den Milchstrom $M_2$ innerhalb des Durchtritts-Ringspaltes 8 in den Bereich unterhalb des Schwimmers 6 transportiert werden. Infolge der Fliehkraftwirkung wandern zunächst die größeren und weiter abwärts die kleineren Gasblasen radial nach innen und reichern dort Teilströme $M_4$ an. Nach den vorstehend erwähnten Kelsallschen Messungen herrscht außerhalb einer Grenzfläche G Abwärtsströmung ($M_3$) und innerhalb Aufwärtsströmung ($M_6$). Die mit Gasblasen unterschiedlichen Durchmessers angereicherten Teilströme durchdringen diese Grenzfläche G und bilden die aufwärts gerichtete Sekundärströmung $M_6$. Im Bereich der Schälkante S am Einbauteil 2 erfolgt eine nochmalige Aufteilung des ankommenden Milchstromes $M_3$ in einen weitestgehend entgasten Teilstrom $M_7$ und einen nach oben umgelenkten Teilstrom $M_5$. Über die mittige Öffnung 5a

des Verdrängungskörpers 5 kann ein mit Gasblasen beladener Teilstrom $M_8$ aufsteigen. Oberhalb des Verdrängungskörpers 5 vereinigt sich dieser mit dem Teilstrom $M_6$ und gelangt über die Mittelöffnung 6a als Teilstrom $M_9$ in den Bereich der Sekundärströmung oberhalb des Schwimmers 6. Aus dem Kernbereich des Gehäuses 1 verläßt ein Gasstrom $L_2$ die Milch, um zusammen mit dem Gasstrom $L_1$ den Gasraum oberhalb des Flüssigkeitsspiegels zunehmend zu erweitern. Dadurch wird das Flüssigkeitsniveau nach unten verdrängt, so daß der Schwimmer 6 sich abwärts bewegt. Durch diese Abwärtsbewegung wird entweder die Entlüftungsvorrichtung angesteuert, wobei die Luft oberhalb des Milchspiegels entweichen kann oder aber eine der Auslauföffnung A nachgeschaltete Fördereinrichtung wird gedrosselt, wobei gleichzeitig über eine am Deckelteil 1b angeschlossene Vakuumeinrichtung Gas aus dem oberen Bereich des Gehäuses 1 abgesaugt wird. Damit sich auch kleinste Gasblasen aus dem energiereichen Flüssigkeitsfilm in Wandnähe radial nach innen in den Bereich der Aufwärtsströmung abscheiden können, ist erfindungsgemäß ein hinreichend langer axialer Strömungsweg zwischen dem Ende des Durchtritts-Ringspaltes 8 und der Schälkante S am Einbauteil 2 vorgesehen, wobei gleichzeitig durch den tangential ausmündenden Auslaufstutzen 1c wirksam für eine Erhaltung des Flüssigkeitsdralls gesorgt wird.

Sobald der Schwimmer 6 in den Bereich seiner Abschaltstellung absinkt, umfaßt er mit seiner Mittelöffnung 6a den Verdrängungskörper 5. Der unterhalb des Schwimmers 6 zur Verfügung stehende Abscheideweg wird zwangsläufig kürzer. Dieser Nachteil wird teilweise dadurch kompensiert, daß die axiale Strömungskomponente infolge reduzierter Annahmeleistung bei gleichzeitigem Abbau des die Durchströmung des Gehäuses 1 betreibenden Gasdrucks oberhalb des Flüssigkeitsspiegels und erhöhter Druckverlustbeiwerte infolge Querschnittsreduzierung in der Schaltphase ebenfalls herabgesetzt wird.

Einen Querschnitt in schematischer Darstellung durch eine Vorrichtung zur Durchführung des weitergebildeten Verfahrens gemäß der Erfindung mit einer im Gegenstrom arbeitenden Vorstufe zeigt Figur 6. Ausgehend vom bereits in Figur 1 beschriebenen Aufbau der Vorrichtung, die im übrigen in allen ihren bereits erläuterten Merkmalen unverändert bleibt, besteht die erfindungsgemäße Weiterbildung darin, daß unterhalb des Deckelteils 1b und zentrisch zum Gehäusemantel 1a ein rohrförmiges, in sich geschlossenes Leitblech 10 angeordnet ist. An einer höchstmöglichen Stelle dieses Leitbleches 10 ist in dessen Mantelbereich eine Eintrittsöffnung 10c vorgesehen, an die der Einlaufstutzen 1d tangential und erforderlichenfalls mit einer geringen abwärts gerichteten axialen Komponente angeschlossen ist. An seinem oberen Ende ist das Leitblech 10 über ein eine zentrische Öffnung 10b aussparendes Deckelteil 10a teilweise geschlossen, so daß die Einbauten 6b, 6c und 7 unbehindert nach oben durch das Deckelteil 1b hindurchgeführt werden können. Im Bereich des unteren Endes des Leitbleches 10 ist eine ringförmiges Umlenkblech 11 angeordnet, das mit letzterem einen zentrischen Ringspalt 12 bildet.

Die Wirkungsweise dieses als Vorluftabscheider wirkenden Leitbleches 10 ist folgende:
Das über den Einlaufstutzen 1d mit hoher kinetischer Energie eintretende Luft/Milch-Gemisch strömt der Innenseite des rohrförmigen, in sich geschlossenen Leitbleches 10 tangential und erforderlichenfalls mit einer geringen abwärts gerichteten axialen Komponente zu. Es bildet sich ein Flüssigkeitsfilm 13 aus, der sich schraubenförmig abwärts bewegt. Im Gegenstrom zu dieser Gas/Milch-Strömung 15 scheiden sich radial nach innen Luftblasen $L_3$ ab, die über die zentrische Öffnung 10b den Innenraum des Leitbleches 10 nach oben verlassen. Das vorentgaste Gas/Milch-Gemisch M verläßt über den Ringspalt 12 das Leitblech 10, um weitestgehend kreuzungsfrei in die Hauptströmung, deren Oberfläche sich in der Form eines Rotationsparaboloiden 14 ausbildet, einzutreten oder auf diese aufgeschichtet zu werden.

Neben der Vorentgasung über die filmartige Ausbreitung des Trägermediums Milch trägt die Einleitung des vorentgasten Luft/Milch-Gemisches im Bereich des Ringspaltes 12 wesentlich zur Verbesserung der Luftabscheidung bei. Abhängig von der Lage des Flüssigkeitsspiegels 14 wird entweder, wie in Figur 6 dargestellt, das gesamte vorentgaste Luft/Milch-Gemisch M durch das Umlenkblech 11 erfaßt und umgeleitet, oder aber es bildet sich bei höherliegendem Flüssigkeitsspiegel innerhalb des Leitbleches 10 ein zweiter Rotationsparaboloid aus, so daß nur noch die im Einzugsbereich des Umlenkbleches 11 vorentgaste Milchströmung, die ein Teilstrom des Gesamtstromes M darstellt, von diesem erfaßt und umgelenkt wird.

Figur 7 zeigt einen Querschnitt in schematischer Darstellung durch eine andere Vorrichtung zur Durchführung des weitergebildeten Verfahrens gemäß der Erfindung mit einer im Gleichstrom arbeitenden Vorstufe. Unterhalb des Deckelteiles 1b und zentrisch zum Gehäusemantel 1a ist ein beiderseits offenes, in sich geschlossenes, nach oben sich erweiterndes, Leitblech 16 angeordnet, das an einer tiefstmöglichen Stelle eine Eintrittsöffnung 16c in seinem Mantelbereich aufweist, an die der Einlaufstutzen 1d tangential und erforderlichenfalls mit einer aufwärts gerichteten axialen Komponente angeschlossen ist. Das Leitblech 16 besteht im wesentlichen aus einem Kegelmantel, der über eine obere und eine untere Öffnung 16b bzw. 16e vollständig axial durchgängig ist. An seinem oberen Ende verfügt das Leitblech 16 über einen sich nach innen auswölbenden Kragen 16a, der wenigstens eine, im Drehsinn der Eintrittsöffnung 16c orientierte, tangentiale Austrittsöffnung 16d aufweist. Eine beispielhafte Ausführungsform der Eintrittsöffnung 16c und der tangientialen Austrittsöffnung 16d sind in einer Draufsicht in Figur 7a verdeutlicht. Der Einlaufstutzen 1d ist um wenigstens 180 Grad am Außenmantel des Leitbleches 16 herumgeführt.

Die Wirkungsweise der beschriebenen Anordnung ist folgende: Das Luft/Milch-Gemisch M strömt der Innenseite des Leitbleches 16 von unten tangential und mit einer aufwärts gerichteten axialen Komponente zu. Der sich dabei ausbreitende

Flüssigkeitsfilm 13 strömt als spiralförmige Luft/Milch-Strömung 15 aufwärts und verläßt die im Bereich des Kragens 16a angeordneten tangentialen Austrittsöffnungen 16d als vorentgastes Luft/Milch-Gemisch M. Luftblasen $L_3$ haben aufgrund des wesentlich verkürzten Abscheideweges in der Filmströmung 13 die Gelegenheit, das im Gleichstrom geführte Trägermedium Milch radial nach innen zu verlassen. Die abgeschiedene Luft $L_3$ kann über die obere Öffnung 16b den Kopfraum des Gehäuses 1 verlassen. Das vorentgaste Luft /Milch-Gemisch M wird im Bereich der tangentialen Austrittsöffnungen 16d weitestgehend kreuzungsfrei in die Hauptströmung mit ihrer als Rotationsparaboloiden ausgebildeten Oberfläche 14 abgeleitet oder auf diese von innen aufgeschichtet.

Damit eine einfache Montage und Demontage des Leitblechs 10 bzw. 16 in Verbindung mit dem Einlaufstutzen 1d möglich ist, wird in einer in den Figuren 6 und 7 nicht dargestellten Weise der Einlaufstutzen 1d über das Deckelteil 1b zugeführt, und das Leitblech 10 bzw. 16 an letzterem befestigt.

Figur 8 zeigt die Anordnung einer Feder 17, auf der sich der Schwimmer 6 in Verbindung mit seinem Gestänge 6b über das schwimmerseitige Federwiderlager 6d auf dem Weg in seiner Abschaltstellung zunehmend abstützt. Die Feder 17 liegt andererseits an einem gehäusefesten Federwiderlager 5b an, das im dargestellten Ausführungsbeispiel am feststehenden Verdrängungskörper 5 angeordnet ist. Der Vorspannweg a der Feder 17 ist so bemessen, daß von ihr auf den Schwimmer 6 erst bei dessen Einfahren in die Abschaltstellung ein stetig anwachsender Kraftangriff bis zur maximalen Federkraft $F_{max}$ erfolgt. Im Bereich des Krafteingriffs der Feder 17 wird aus dem freischwimmenden Schwimmer 6 in zunehmendem Maße ein Schwimmer mit Verdrängerfunktion.

Die Wirkungsweise und die theoretische Begründung für die Erhöhung der Abschaltgenauigkeit des Schwimmers 6 wird im folgenden kurz erläutert:

Bezeichnet man die Masse des Schwimmers mit $m_s$, den Querschnitt des Schwimmers mit $A_S$, die freien Querschnitte mit Restquerschnitt $A_{R1}$, $A_{R2}$ und $A_{R3}$, wobei der gesamte Restquerschnitt $A_R$ sein soll, mit P einen Bezugspunkt des Schwimmers auf Abschaltniveau N, ein Nachschwallvolumen mit $\Delta V$, die Dichte der Milch mit $\varrho$, den Flüssigkeitsstand, bezogen auf Niveau N, allgemein mit X, den Vorspannweg der Feder bis zur Abschaltlage des Schwimmers mit a, die in dieser Anordnung wirkende maximale Federkraft mit $F_{max}$, und benennt man als Folge eines Nachschwallvolumens $\Delta V$ mit $x_p$ den Schwimmerhub und mit $\Delta x_{Fl}$ die Änderung des Flüssigkeitsstandes, jeweils bezogen auf das Abschaltniveau N, so lassen sich folgende Beziehungen für die beiden letztgenannten Größen und für den auf einer Feder 17 abgestützten Schwimmer 6 herleiten:

$$x_p = \psi\, \Delta V/(A_R + A_S)\ , \qquad (4)$$

$$\Delta x_{Fl} = \{(A_R + A_S(1 - \psi))/A_R\}\Delta V/(A_R + A_S)\ . \qquad (5)$$

mit $$\psi = 1/(1 + C_F/\varrho g A_S(1 + A_S/A_R))\ , \qquad (6)$$

wobei $$C_F = F_{max}/a \qquad (7)$$

die Federkonstante der Feder 17 ist.

Der federgestützte Schwimmer (Fall I) geht im Grenzfall einerseits in den frei auf Abschaltniveau N in der Flüssigkeit schwimmenden Schwimmer (Fall II) und andererseits in den auf einem festen Anschlag auf Abschaltniveau N aufsitzenden Schwimmer (Fall III) über.

Im Fall II ist $c_F = 0$ , (7a)

daraus folgt , $\psi = 1$ , (6a)

und somit wird $x_P = \Delta x_{Fl} = \Delta V/(A_S + A_R)$ . (4a,5a)

Im Fall III ist $c_F = \infty$ , (7b)

daraus folgt $\psi = 0$ , (6b)

und somit wird $x_P = 0$ (4b)

und $\Delta x_{Fl} = \Delta V/A_R$ . (5b)

Man erkennt für Fall I

$$0 < c_{FI} < \infty \,, \quad (7c)$$

$$0 < \psi_I < 1 \,, \quad (6c)$$

$$0 < x_{PI} < \Delta V/(A_S + A_R) \,, \quad (4c)$$

und $\Delta V/(A_S + A_R) < \Delta x_{Fl} < \Delta V/A_R$ . (5c)

Ein frei auf Abschaltniveau N schwimmender Schwimmer 6 (Fall II), der den größten Teil des Luftabscheiderquerschnitts (vgl. Figur 8) ausfüllt, ist unter Einhaltung der gesetzlich vorgeschriebenen Eichfehlergrenzen nicht realisierbar, da die Gleichung (5a) mit den eichamtlichen Forderungen $\Delta V < 100$ ml (1 % von der kleinsten Annahmemenge $V_{min}$ = 10 Liter) für $\Delta x_{Fl} > 10$ mm in der Praxis nicht erfüllbar ist.

Daher ist auch schon vorgeschlagen worden, den Luftabscheiderquerschnitt im Bereich des Abschaltniveaus N des Schwimmers durch einen gehäusefesten Verdrängungskörper so weit zu reduzieren, daß die eichamtlichen Vorschriften erfüllbar sind. Der Schwimmer befindet sich dann vorzugsweise innerhalb des ihn konzentrisch umschließenden Verdrängungskörpers (vgl. DE-PS 24 37 306, DE-PS 26 37 026 oder DE-AS 30 40 670). Diese Lösungen haben aber, an dieser Stelle nicht näher erläuterte, Nachteile.

Eine Lösungs des Problems, die die eichamtlichen Vorschriften erfüllt, ist dagegen bei Realisierung des vorstehenden Falles III (Schwimmer sitzt auf) bei einer Luftabscheideranordnung gemäß Figur 8 gegeben. Gleichung (5b) kann die vorgenannten Bedingungen in der Regel leicht erfüllen. Dies ist selbst dann der Fall, wenn auf den Verdrängungskörper 5 ganz verzichtet wird (vgl. DE-PS 28 55 653) und der Schwimmer 6 den Luftabscheiderquerschnitt überwiegend allein ausfüllt. Ein aufsitzender Schwimmer ist jedoch ein sehr unempfindlicher Schwimmer, da in der Regel ungewiß ist, wieviel Flüssigkeit zwischen dem Zustand des "noch Schwimmens" und dem Zustand es "Aufsitzens in Abschaltstellung" aus dem Luftabscheiderbehälter abgeströmt ist. Daß mit einer derartigen Flüssigkeitsmenge zu rechnen ist, ergibt sich aus der Trägheit des gesamten Systems. Erst wenn diese Flüssigkeitsmenge, beispielsweise bei Nachschwallströmung, aufgefüllt wurde, vollzieht der Schwimmer 6 einen Hub $x_p$, mit dem die erforderliche Mengenabgrenzung als Folge der vorgenannten Nachschwallmenge gesteuert werden kann (vgl. auch Gleichung 4b).

Die erfindungsgemäß vorgeschlagene Feder 17 schafft hier Abhilfe. Da in der Abschaltstellung N des Schwimmers 17 jedes noch so kleine Flüssigkeitsvolumen $\Delta V$ eine Veränderung der Auftriebskraft am Schwimmer 17 bewirkt, die die Feder 17 entlastet, ergibt sich zwangsläufig ein Schwimmerhub $x_p$ gemäß Gleichung (4), mit dem unverzüglich die notwendige Mengenabgrenzung gesteuert werden kann.

53ASW5n

0192182

## PATENTANSPRÜCHE

1. Verfahren zur Gasabscheidung aus Milch und Abgrenzung von Milchmengen im Zuge der Überführung dieser Milchmengen aus einem Milchbehälter in einen Sammelbehälter, wobei das Gas/Milch-Gemisch in eine Vorrichtung zur Gasabscheidung eingeleitet wird, dort verweilt, in seine Komponenten getrennt, und weitgehend entgaste Milch im Umfange der zu überführenden Milchmenge aus der Vorrichtung abgeführt wird,
dadurch gekennzeichnet, daß
zusätzlich zum an sich bekannten Abscheidemechanismus durch Gasblasenauftrieb im Schwerefeld der Erde die Gasabscheidung durch Fliehkräfte in einer rotierenden Hauptströmung, die ihre Antriebsenergie aus sich selbst bezieht, gezielt forciert wird.

2. Verfahren nach Anspruch 1,
dadurch gekennzeichnet, daß
die Gasabscheidung zweistufig erfolgt, wobei sich in einer Vorstufe das Gas im Gegen- oder alternativ im Gleichstrom zum filmartig ausgebreiteten Trägermedium Milch abscheidet, und daß anschließend die vorentgaste Milch weitestgehend kreuzungsfrei in die Hauptströmung eingeleitet oder auf diese aufgeschichtet wird.

3. Vorrichtung zur Durchführung des Verfahrens nach Anspruch 1, wobei diese einen Teil einer Meßanlage zur Annahme von Milch aus Milchbehältern und zur Überführung der Milch in einen Sammelbehälter darstellt,

bestehend aus einem Gehäuse mit einem in den oberen Bereich tangential einmündenden Einlaufstutzen, einem aus dem unteren Bereich ausmündenden Auslaufstutzen, einer dem Deckelteil des Gehäuses zugeordneten Entlüftungsvorrichtung, einem die Entlüftungsvorrichtung in Abhängigkeit vom Milchspiegel im Gehäuse betätigenden und begrenzt auf- und abbeweglich geführten Schwimmer, der an einem Außenumfang mit der Innenwandung des Gehäusemantels einen Durchtritt-Ringspalt bildet, und der eine den oberen und den unteren Bereich des Gehäuses miteinander verbindende Mittelöffnung aufweist, sowie einem im mittleren Bereich des Gehäuses angeordneten Verdrängungskörper, der mit einer durchgehenden zentrischen Öffnung versehen ist, dadurch gekennzeichnet, daß

der Gehäusemantel (1a) einen gegenüber seiner Höhe kleinen Durchmesser im Bereich des Einlaufstutzens (1d) aufweist, daß der Auslaufstutzen (1e) tangential aus dem Gehäusemantel (1a) ausmündet, und daß der Schwimmer (6) in seiner Schaltphase den Verdrängungskörper (5) mit der Mittelöffnung (6a) umschließt.

4. Vorrichtung nach Anspruch 3, dadurch gekennzeichnet, daß

ein Einbauteil (2) vorgesehen ist, das mit dem Gehäusemantel (1a) einen Ringspalt (4) bildet und in Verbindung mit dem Bodenteil (1c) einen Ringraum (3) begrenzt, der in den Auslaufstutzen (1e) ausmündet und über den Ringspalt (4) mit dem mittleren Bereich des Gehäuses (1) verbunden ist.

5. Vorrichtung nach Anspruch 4, dadurch gekennzeichnet, daß

das Einbauteil (2) an seinem den Ringspalt (4) begrenzenden Umfang eine Schälkante (S) aufweist, und daß am Gehäusemantel (1a) eine nach innen ausgebildete umlaufende Auswölbung (1f) vorgesehen ist, wobei die Schälkante (S) innerhalb eines axialen Bereichs beiderseits der Auswölbung (1f) positioniert ist.

6. Vorrichtung nach Anspruch 5, dadurch gekennzeichnet, daß

die der Auswölbung (1f) zugeordnete Schälkante (S) in Mehrfachanordnung als Reihenschaltung vorgesehen ist.

7. Vorrichtung nach einem der Ansprüche 3 bis 6, dadurch gekennzeichnet, daß

der Gehäusemantel (1a) über seine gesamte Höhe zylindrische Form aufweist.

8. Vorrichtung nach einem der Ansprüche 3 bis 6, dadurch gekennzeichnet, daß

sich der Gehäusemantel (1a) zwischen dem Einlauf- und dem Auslaufstutzen (1d bzw. 1e) stetig konisch verjüngt.

9. Vorrichtung nach einem der Ansprüche 6 bis 8, dadurch gekennzeichnet, daß

das Einbauteil (2) als Flüssigkeitsverdränger ausgebildet ist.

10. Vorrichtung nach einem der Ansprüche 3 bis 9, dadurch gekennzeichnet, daß

der Bodenteil (1c) in radialer Richtung von außen nach innen stetig ansteigend ausgebildet ist.

11. Vorrichtung nach einem der Ansprüche 3 bis 10, dadurch gekennzeichnet, daß

vor dem Durchströmen des Gehäuses (1) der Schwimmer (6) aus dem Strömungsbereich in eine Position oberhalb des Einlaufstutzens (1d) aufschwimmt.

12. Vorrichtung nach einem der Ansprüche 3 bis 10, dadurch gekennzeichnet, daß

vor dem Durchströmen des Gehäuses (1) ein in Segmente aufgeteilter Schwimmer (6) aus dem Strömungsbereich in eine Position oberhalb des Verdrängungskörpers (5) radial nach innen geführt wird.

13. Vorrichtung nach einem der Ansprüche 3 bis 12, dadurch gekennzeichnet, daß

innerhalb der Öffnung (5a) des Verdrängungskörpers (5) ein zweiter Schwimmer (9) vorgesehen ist, der in der Abschaltstellung des Schwimmers (6) den Flüssigkeitsstand (N) über mechanische MIttel (9a) in einem Bereich oberhalb des Deckelteils (1b) abbildet.

14. Vorrichtung zur Durchführung des Verfahrens nach Anspruch 2, ausgebildet nach einem der Ansprüche 3 bis 13, dadurch gekennzeichnet, daß

unterhalb des Deckelteils (1b) und zentrisch zum Gehäusemantel (1a) ein rohrförmiges, in sich geschlossenes Leitblech (10) angeordnet ist, das an einer höchstmöglichen Stelle eine Eintrittsöffnung (10c) in seinem Mantelbereich aufweist, an die der Einlaufstutzen (1d) tangential und erforderlichenfalls mit einer geringen abwärts gerichteten axialen Komponente angeschlossen ist, und das an seinem oberen Ende über ein eine zentrische Öffnung (10b) aussparendes Deckelteil (10a) teilweise geschlossen ist.

15. Vorrichtung nach Anspruch 14,
dadurch gekennzeichnet, daß

im Bereich des unteren Endes des Leitbleches (10) ein ringförmiges Umlenkblech (11) angeordnet ist, das mit dem Leitblech (10) einen zentrischen Ringspalt (12) bildet.

16. Vorrichtung zur Durchführung des Verfahrens nach Anspruch 2, ausgebildet nach einem der Ansprüche 3 bis 13,
dadurch gekennzeichnet, daß

unterhalb des Deckelteils (1b) und zentrisch zum Gehäusemantel (1a) ein beiderseits offenes, in sich geschlossenes, nach oben sich erweiterndes, Leitblech (16) angeordnet ist, das an einer tiefstmöglichen Stelle eine Entrittsöffnung (16c) in seinem Mantelbereich aufweist, an die der Einlaufstutzen (1d) tangential und erforderlichenfalls mit einer aufwärts gerichteten axialen Komponente angeschlossen ist.

17. Vorrichtung nach Anspruch 16, dadurch gekennzeichnet, daß

am oberen Ende des Leitbleches (16) ein sich nach innen auswölbender Kragen (16a) vorgesehen ist, der wenigstens eine, im Drehsinn der Eintrittsöffnung (16c) orientierte, tangentiale Austrittsöffnung (16d) aufweist.

18. Vorrichtung nach einem der Ansprüche 14 bis 17, dadurch gekennzeichnet, daß

der Einlaufstutzen (1d) über das Deckelteil (1b) zugeführt, und das Leitblech (10, 16) an letzterem befestigt ist.

19. Vorrichtung nach einem der Ansprüche 3 bis 18, dadurch gekennzeichnet, daß

sich der Schwimmer 6 im Bereich seiner Abschaltstellung über eine Feder (17) auf einem gehäusefesten Federwiderlager (5b) abstützt.

1

Fig. 1

0192182

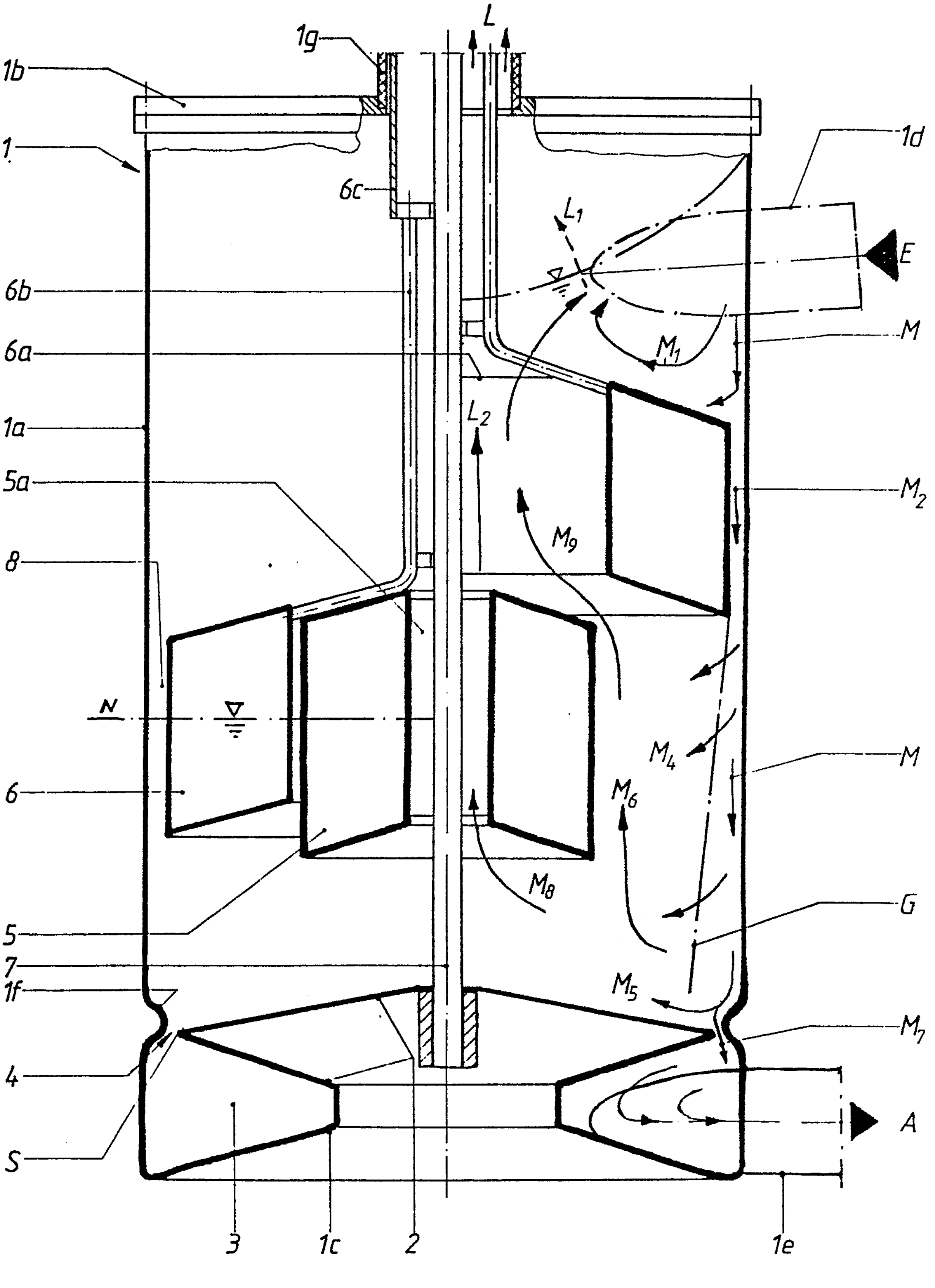

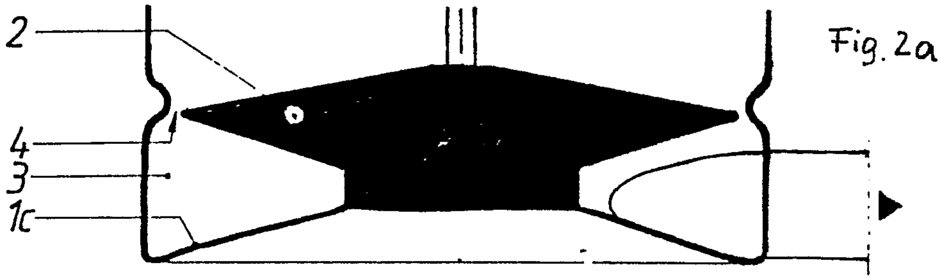

Fig. 2a

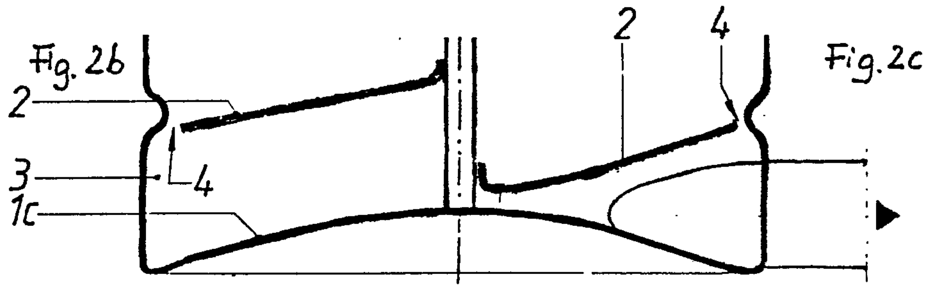

Fig. 2b
Fig. 2c

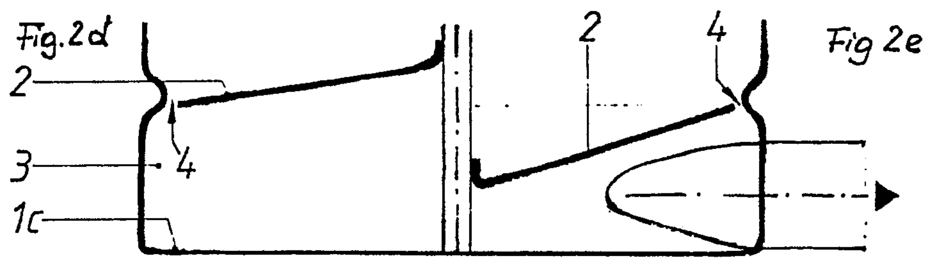

Fig. 2d
Fig 2e

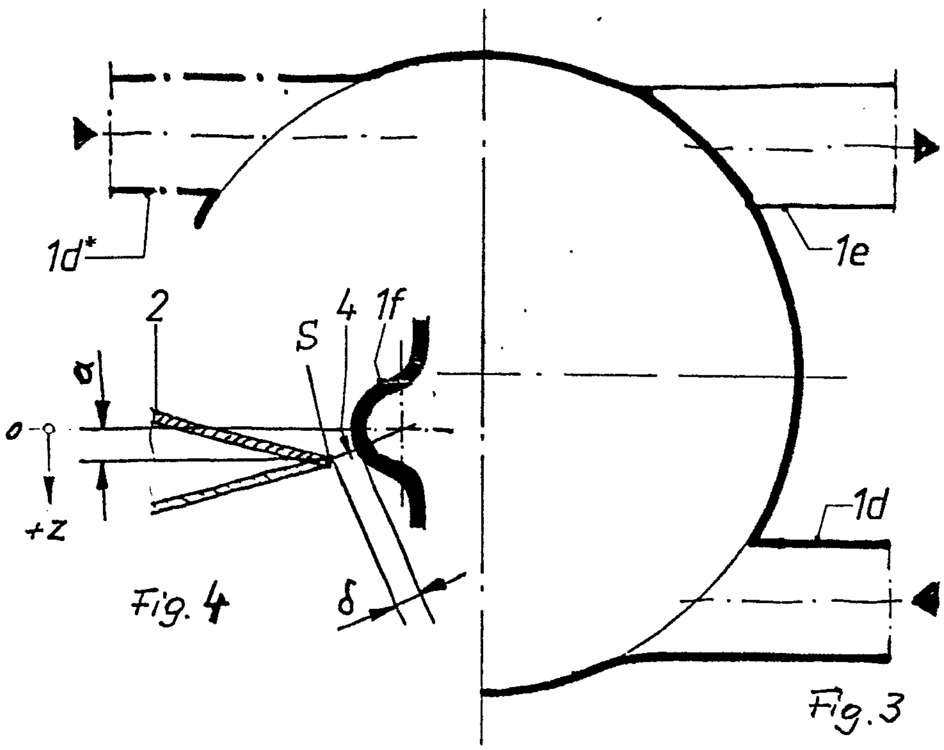

Fig. 4
Fig. 3

Fig.5 0192182

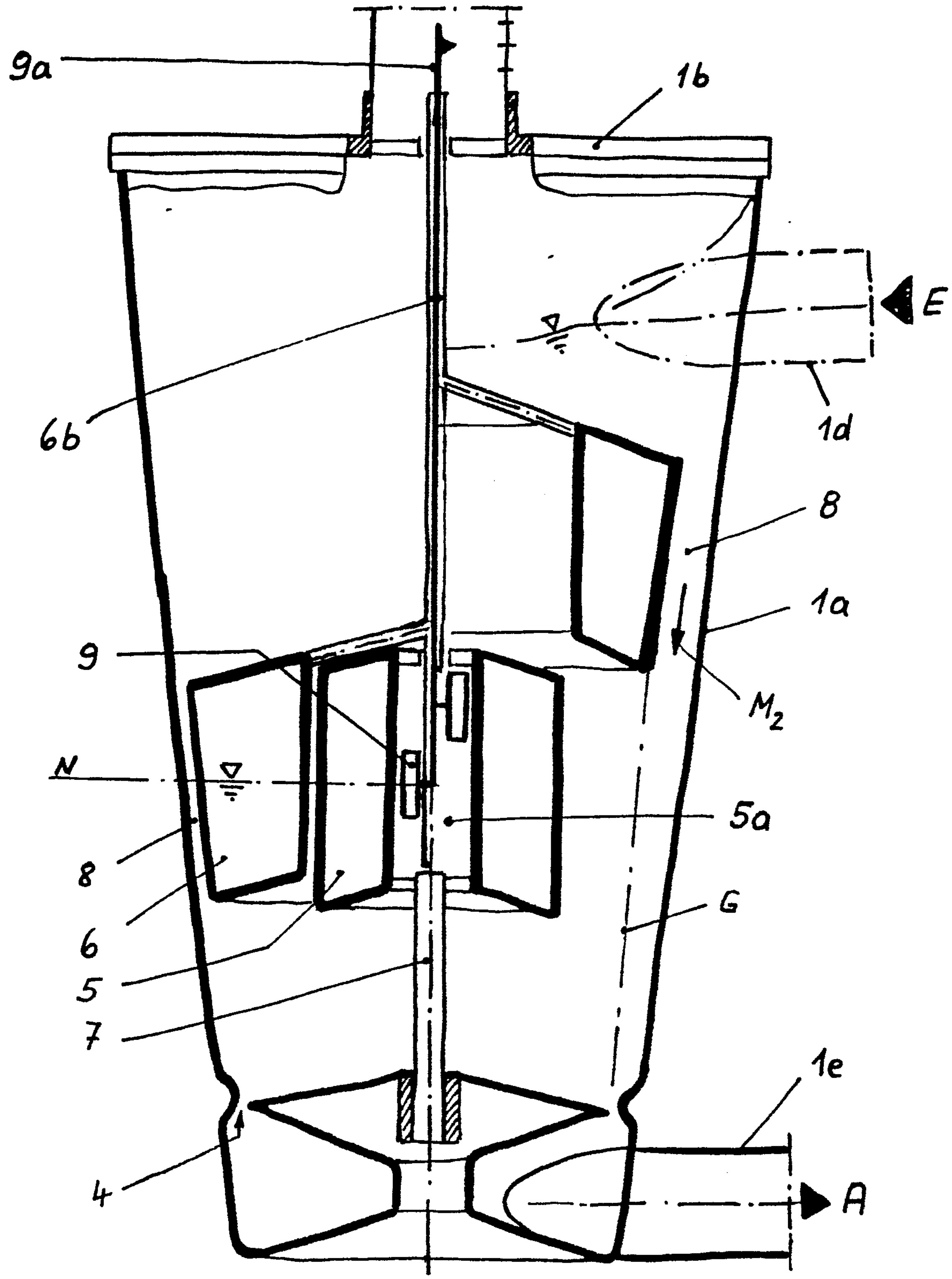

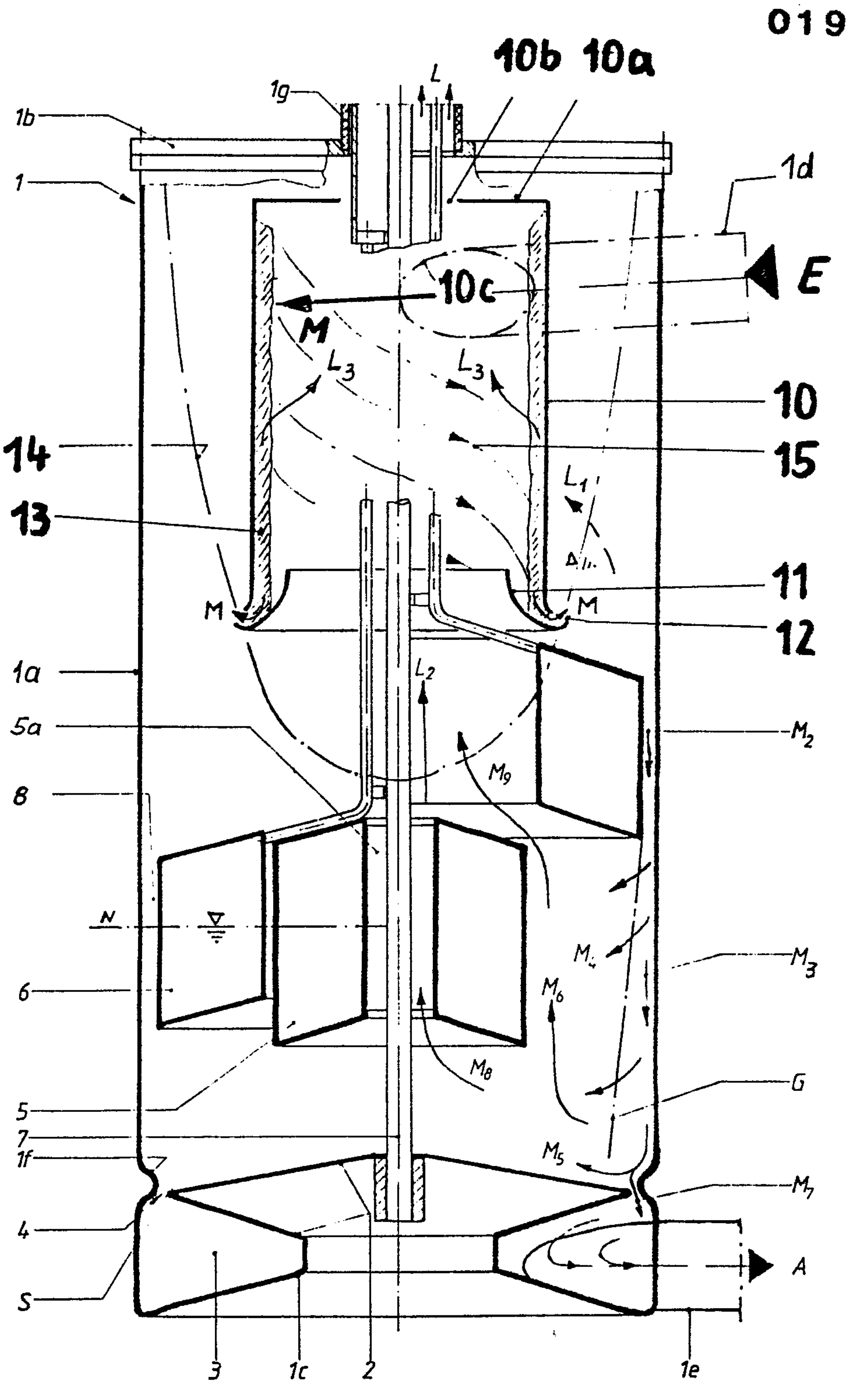

10b
10a
L
1g
1b
1
1d
E
10c
M
L3
L3
10
14
15
L1
13
11
M
M
12
1a
L2
M2
5a
M9
8
N
M4
M3
6
M6
M8
5
G
7
M5
1f
M7
4
A
S
3
1c
2
1e


Fig. 6

0192182

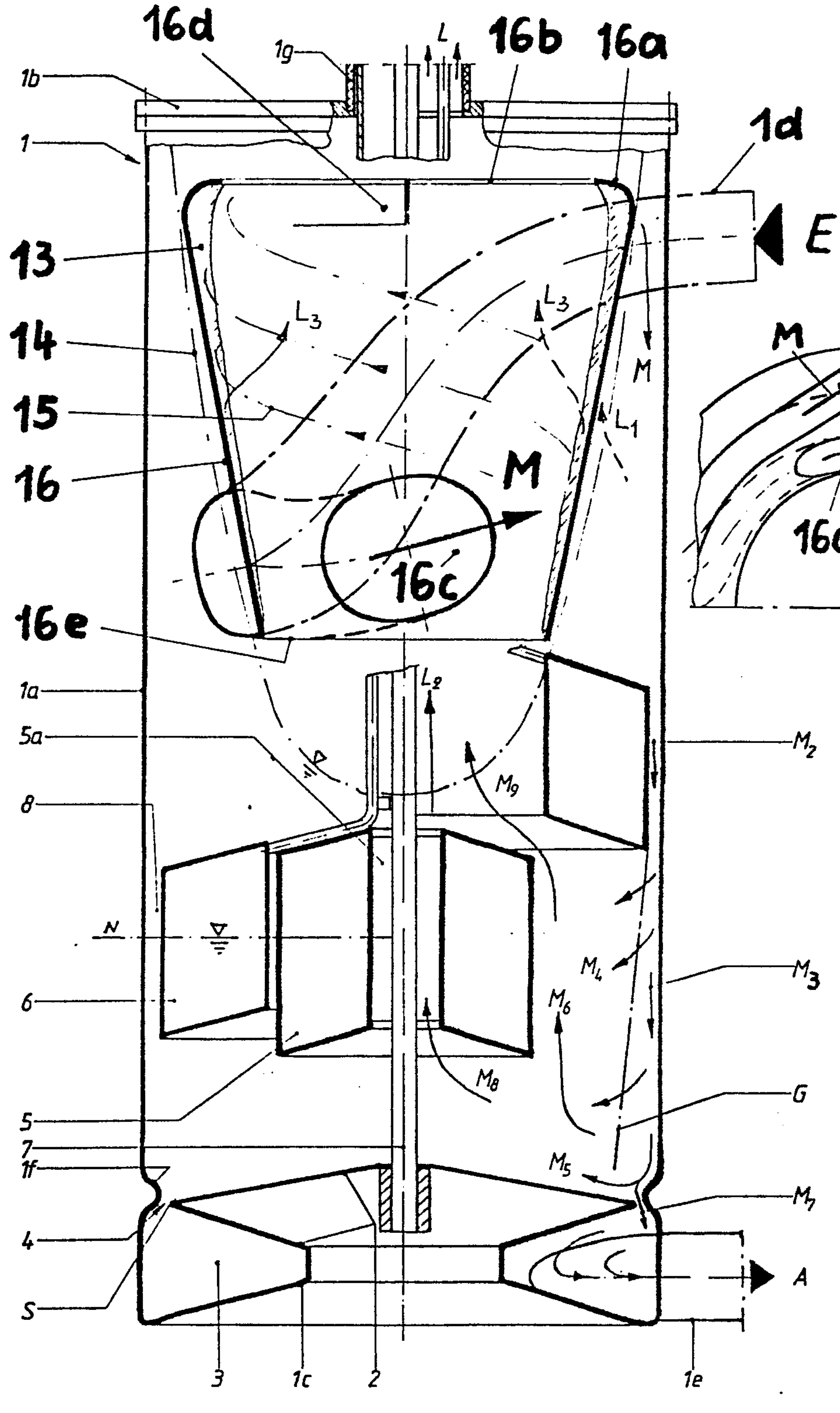


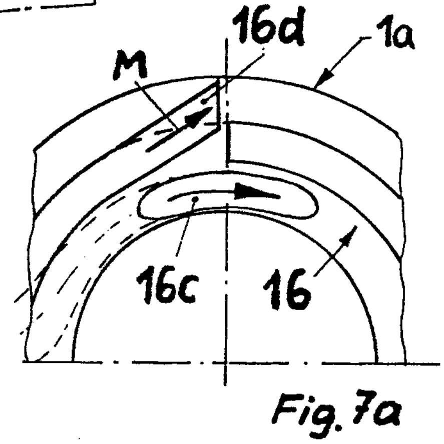


Fig. 7a

Fig. 7

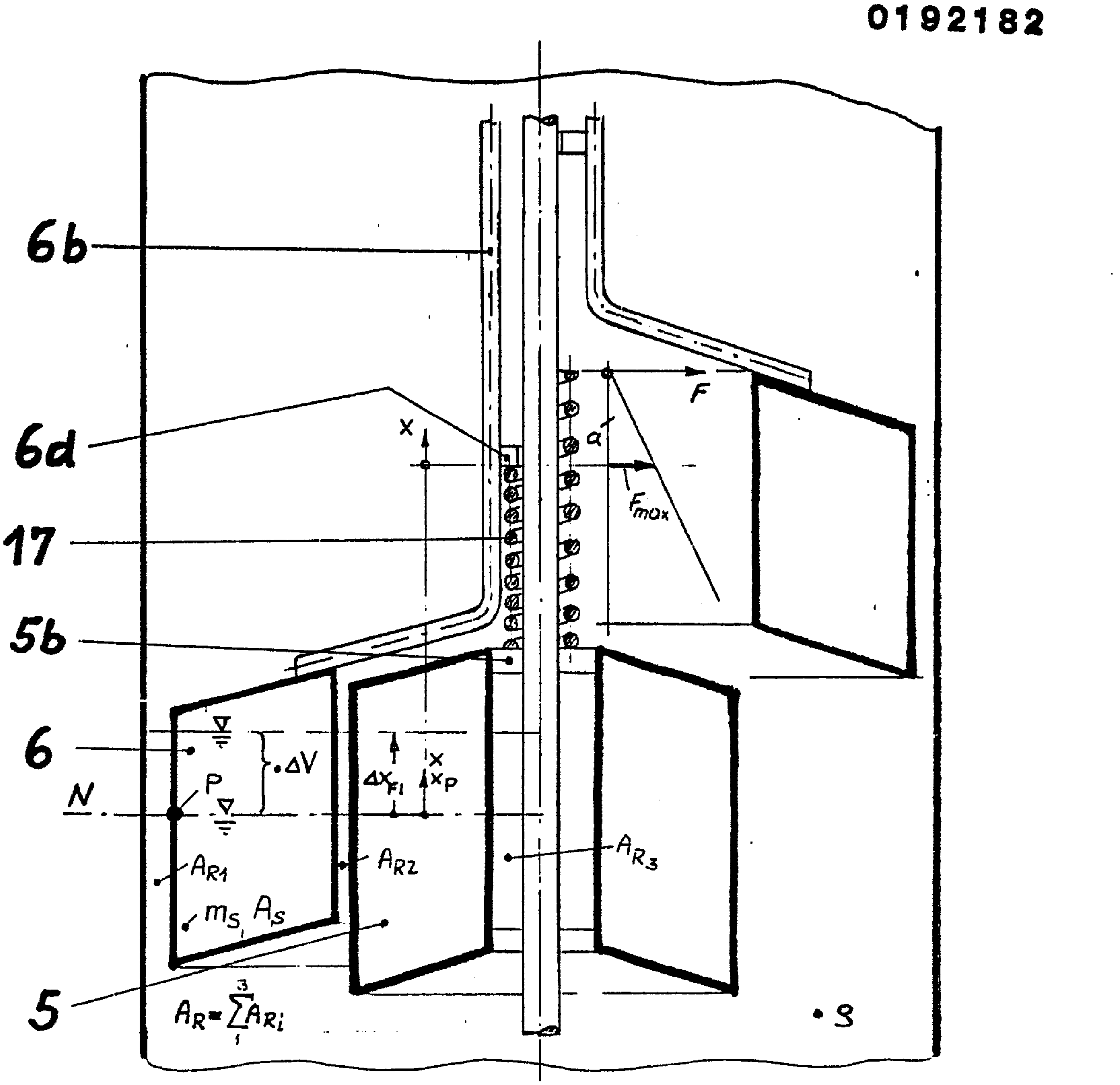
6b
6d
17
5b
6
N
5
F
a
x
$F_{max}$
P
ΔV
$\Delta x_{F1}$
$x_P$
$A_{R1}$
$A_{R2}$
$A_{R3}$
$m_S$, $A_S$
$A_R = \sum_1^3 A_{Ri}$
S

Fig. 8